# EUROPEAN PATENT APPLICATION

(11) **EP 4 213 034 A1**
(43) Date of publication of application: **19.07.2023**
(21) Application number: 21878970.9
(22) Date of filing: 28.05.2021
(51) Int. Cl.: G06F 16/22

(54) **DATA PROCESSING SYSTEM, DATA PROCESSING METHOD BASED ON BLOCKCHAIN, AND DEVICE**

(30) Priority: 16.10.2020 CN 202011111339
(71) Applicant: Huawei Technologies Co., Ltd., Shenzhen, Guangdong 518129 (CN)
(72) Inventor: LUO, Yulong, Shenzhen, Guangdong 518129 (CN); LI, Lin, Shenzhen, Guangdong 518129 (CN)
(74) Representative: Goddar, Heinz J.
(86) International application number: PCT/CN2021/096587
(87) International publication number: WO 2022/077916

(57) **Abstract**

A data processing system is disclosed. The data processing system includes a blockchain system and a database system. The blockchain system includes a block producer and a blockchain management device. The database system includes a database management device. The blockchain management device receives one or more blocks, where each block carries a plurality of pieces of transaction data; and sends a plurality of SQL statements to the database management system, where each SQL statement includes one piece of transaction data, and a block number and a transaction number of the one piece of transaction data. The database management system stores the transaction data, and stores a plurality of pieces of attribute information of the transaction data; and returns, to the blockchain management device, a message indicating that the transaction data is stored. The blockchain management device is further configured to verify first transaction data based on a block number and a transaction number of the first transaction data. In this application, transaction data is first written and then verified, to improve a speed of writing the transaction data into the database management system.

## Description

This application claims priority to Chinese Patent Application No. 202011111339.0, filed with the China National Intellectual Property Administration on October 16, 2020 and entitled "DATA PROCESSING SYSTEM, BLOCKCHAIN-BASED DATA PROCESSING METHOD, AND DEVICE", which is incorporated herein by reference in its entirety.

### TECHNICAL FIELD

This application relates to the field of blockchain technologies, and in particular, to a data processing system, a blockchain-based data processing method, and a device.

### BACKGROUND

A blockchain is a chain data structure that sequentially links blocks including data, and is a cryptographically secured distributed ledger that cannot be tampered and forged. A distributed structure system is built in the blockchain according to a decentralized protocol. After data content is stamped with a timestamp, block data is generated, and then sent to each node in the distributed structure system through distributed transmission, to implement distributed storage.

In an existing blockchain solution, storage is performed by using a key-value (Key-value, KV) database. The KV database is a non-relational database in which data is organized, indexed, and stored in a form of key-value pairs. For the KV database, if a user performs complex query, the user needs to sequentially read all block data, and select the block data one by one. Query efficiency is low. In addition, if the user needs to migrate an existing structured query language (Structured Query Language, SQL) application to a blockchain, service code of a KV interface also needs to be redeveloped, and learning costs are high.

In a current solution of combining a blockchain with an SQL database, transactions of the blockchain are sequentially performed, and an execution result of a previous transaction is usually an input of a next transaction. Therefore, a transaction can be written into the SQL database only after being verified. Consequently, efficiency of writing a transaction into the SQL database is low.

### SUMMARY

Embodiments of this application provide a data processing system and a blockchain-based data processing method, to improve a speed of writing transaction data in a blockchain into a database system. Embodiments of this application further provide a corresponding device, a computer storage medium, a computer program product, and the like.

According to a first aspect, this application provides a data processing system. The data processing system includes a blockchain system and a database system. The blockchain system includes a block producer and a blockchain management device. The database system includes a database management device.

The blockchain management device is configured to: receive one or more blocks sent by the block producer, where each block carries a plurality of pieces of transaction data; and send a plurality of first structured query language SQL statements to the database management device. Each first SQL statement includes one piece of first transaction data in the transaction data carried in the one or more blocks, and a block number and a transaction number of the piece of first transaction data, the block number indicates a block identifier of a block to which the piece of first transaction data belongs, the transaction number indicates an index of the piece of first transaction data in the plurality of pieces of transaction data of the block to which the piece of first transaction data belongs, the first SQL statement further includes a first field, and the first field indicates storing the piece of first transaction data.

The database management device is configured to: store the piece of first transaction data based on the first field, and store a plurality of pieces of attribute information of the piece of first transaction data, where the plurality of pieces of attribute information include the block number and the transaction number of the piece of first transaction data, and validity information of the piece of first transaction data; and return, to the blockchain management device, a message indicating that the first transaction data is stored.

The blockchain management device is further configured to: receive the message, indicating that the first transaction data is stored, that is returned by the data management device, and verify the first transaction data based on the block number and the transaction number of the first transaction data.

In the first aspect, data in the blockchain system is stored in a form of a block, and one block carries a plurality of pieces of transaction data. The transaction data is sequentially stored in the block, and one block is a set of a plurality of pieces of transaction data that are continuously generated. The "transaction data" is data generated by a user based on a service operation. The blockchain system includes a block producer (orderer) and a blockchain management device (committer). The block producer is configured to package transaction data generated by a terminal device into a block. The block producer may be any node that generates a block in a blockchain. The blockchain management device is configured to verify whether the transaction data in the block is valid, and submit the transaction data in the block to the database system. The blockchain management device and the block producer may be on a same physical machine, or different physical machines. The block producer and the blockchain management device may be physical machines or virtual machines. Whether the transaction data is valid usually indicates whether an operation in which the transaction data is generated succeeds. For example, the operation is a transfer transaction. If the transfer transaction fails, transaction data generated during the transfer is invalid. Because each piece of transaction data belongs to a block, and a number of a block in the blockchain system is unique, each piece of transaction data has a corresponding block number. Transaction data in a same block is sequentially numbered, namely, a transaction number of the transaction data. The transaction number is an index of the transaction data in the block, or may be represented as a sequence identifier or a location identifier of the transaction data in the block. A block number of each piece of transaction data in a same block is different, and transaction numbers in different blocks may be the same. Therefore, a block number and a transaction number can be used to uniquely locate a piece of transaction data. When parsing transaction data in a block, the blockchain management device may determine a block number and a transaction number of each piece of transaction data.

In this application, "a plurality of" includes two or more, or may be described as at least two.

In this application, the blockchain management device needs to write transaction data into the database system. The database system is a database system that supports an SQL. Usually, the SQL is a dedicated programming language specifically used to manage data stored in a relational database. The SQL may be various types of data-related languages, including, for example, a data definition language and a data manipulation language, and a range of the SQL may include data writing, querying, updating, deleting, and the like. The database system usually includes a database management system (database management system, DBMS) and a data memory. In this application, the DBMS is described as a database management device. The blockchain management device needs to edit each piece of transaction data into a form of a first SQL statement and send the first SQL statement to the database management system, and the DBMS parses the SQL statement, to complete writing of the transaction data into the data memory. A first field of the first SQL statement indicates storing the transaction data, and the first SQL statement includes the block number and the transaction number of the transaction data. Therefore, the database management system stores the transaction data.

The database management device may maintain a plurality of pieces of attribute information of each piece of transaction data in a form of a correspondence. For the plurality of pieces of transaction data, attributes of the plurality of pieces of transaction data may be maintained in a form of a target table. Several new attributes, for example, a "block number (block num)" column and a "transaction number (tx num)" column, may be added to the attributes of the target table based on the original table for maintaining blockchain data. A "deletion operation (isDelete)" column and a "valid (isValid)" column may also be added. If an operation is deletion, "true" may be filled in the column. If an operation is not deletion, "false" may be filled in the column. In the is Valid column, "true" is filled when transaction data is initially written. It is clear that the attributes of the target table are not limited to the foregoing types, and may further include a start location of a storage address of the transaction data in the data memory, a length of the transaction data, and the like.

In the first aspect, the transaction data is verified only after the transaction data is written into the database management device. Therefore, a plurality of pieces of transaction data can be synchronously written, to improve a speed of writing the transaction data into the database system.

In a possible implementation of the first aspect, the blockchain management device is further configured to synchronously send the plurality of first structured query language SQL statements to the database management device and verify second transaction data. The second transaction data is stored in the database system before the first transaction data.

In this possible implementation, synchronous execution indicates execution in parallel. When the first transaction data is written, the second transaction data that is previously written into the database system may be synchronously verified. Therefore, the first transaction data may be written and the second transaction data may be verified at the same time. For example, if the second transaction data in a block 1, a block 2, and a block 3 is written into the database system, and the first transaction data in a block 4, a block 5, and a block 6 is being written, the second transaction data in the block 4, the block 5, and the block 6 may be written and the first transaction data in the block 1, the block 2, and the block 3 may be verified at the same time. It can be learned that, for different transaction data, writing and verification may be performed in parallel in the first aspect. This improves a speed of processing transaction data.

In a possible implementation of the first aspect, the blockchain management device sends the plurality of first SQL statements in parallel.

In this possible implementation, a plurality of pieces of first transaction data corresponding to the plurality of first SQL statements may belong to a plurality of blocks, or may belong to one block, and the plurality of pieces of first transaction data may include at least two pieces of first transaction data in a same block. When sending the first SQL statement, the blockchain management device may send the plurality of first SQL statements in parallel. When writing the transaction data, the database management device may write the first transaction data in parallel, that is, storing the plurality of pieces of first transaction data in parallel. In addition, for each block, transaction data may be written in batches. This can greatly improve a speed of writing transaction data into the database management device.

In a possible implementation of the first aspect, the blockchain management device is configured to send a second SQL statement to the database management device. The second SQL statement includes a second field, and a block number and a transaction number of transaction data that needs to be verified, and the second field indicates the database management device to return validity information related to the transaction data that needs to be verified.

The database management device is further configured to return the validity information based on the second field, and the block number and the transaction number of the transaction data that needs to be verified.

The blockchain management device is configured to: receive the validity information returned by the database management device, and verify, based on the validity information, the transaction data that needs to be verified.

In this possible implementation, the database management device may return the validity information based on the block number and the transaction number of the transaction data that needs to be verified. The validity information may be validity information of latest transaction data generated before the transaction data that needs to be verified, and the returned validity information may alternatively be at least one primary key and at least one piece of corresponding validity information, or may be a returned database view table. The database view table includes at least one primary key and at least one piece of corresponding validity information. The database view table can be selected from a target table. The target table includes a plurality of rows of transaction data relationship rows, and each relationship row includes a plurality of pieces of attribute information of one piece of transaction data. In this application, to-be-written transaction data may be written and written transaction data may be verified at the same time. Therefore, a plurality of pieces of attribute information of some pieces of transaction data in the target table are generated before the transaction data that needs to be verified. A plurality of attribute information of some pieces of transaction data are generated after the transaction data that needs to be verified. For the plurality of pieces of attribute information of transaction data that are generated after the transaction data that needs to be verified, verification of the transaction data that needs to be verified is not affected. Therefore, only attribute information of transaction data that is generated before the transaction data that needs to be verified needs to be selected. It is considered that previously generated transaction data includes a plurality of pieces of transaction data of a same primary key. The primary key may be, for example, an account name or a card number, and the plurality of pieces of transaction data of a same primary key may be understood as data generated by a plurality of transaction operations of a same account name. Because data in the account name is continuously updated due to the plurality of operations, only transaction data generated by a last transaction operation is meaningful to the transaction data that needs to be verified. Therefore, the database view table only includes attribute information of latest transaction data, and the latest transaction data is data generated in a last transaction of a same primary key before the transaction data that needs to be verified. When the database management device does not learn of a primary key to which the transaction data verified by the blockchain management device belongs, the database view table returns attribute information of latest transaction data of each primary key that is generated before the transaction data that needs to be verified. During verification, if validity information of the latest transaction data indicates that the latest transaction data is invalid, the transaction data that needs to be verified is invalid. If the database management device returns a database view table, the blockchain management device first determines whether transaction data indicated by description information in the database view table is valid. If the transaction data is valid, the blockchain management device re-verifies the transaction data that needs to be verified. If the transaction data is invalid, it indicates that previous transaction data on which the transaction data that needs to be verified depends is incorrect, and a current transaction is invalid. Then, the transaction data that needs to be verified is re-verified. This improves accuracy of verifying transaction data.

In a possible implementation of the first aspect, the blockchain management device is further configured to send a third SQL statement to the database management device. The third SQL statement includes a third field, and a block number and a transaction number of transaction data that fails to be verified, and the third field indicates modifying validity information.

The database management device is further configured to modify, based on the third field, and the block number and the transaction number of the transaction data that fails to be verified, the validity information of the transaction data that fails to be verified to be invalid.

In this possible implementation, when the transaction data fails to be verified, it indicates that the transaction data is invalid transaction data, but the transaction data is written into the database management device. In this case, the database management device needs to be notified of modifying "true" of the transaction data in the isValid column in the target table to "false". In this way, when the transaction data is queried, a corresponding result indicating that the transaction data is invalid or that the transaction data does not exist may be returned.

In a possible implementation of the first aspect, the blockchain management device is further configured to re-verify transaction data that is verified after the transaction data that fails to be verified.

In this possible implementation, if other transaction data is further verified after the transaction data that fails to be verified, to ensure accuracy of the transaction data, transaction data that is verified after the transaction data that fails to be verified is re-verified in this application. This improves accuracy of verifying transaction data.

In a possible implementation of the first aspect, the blockchain management device is further configured to send a fourth SQL statement to the database management device. The fourth SQL statement includes a fourth field, and the fourth field indicates clearing data.

The database management device is further configured to clear, based on the fourth field, expired transaction data or invalid transaction data, and a plurality of pieces of attribute information of cleared transaction data.

In this possible implementation, the expired transaction data may be a subsequent transaction operation performed on the account, and data generated in a previous transaction is of no use. The expired transaction data may be determined based on time at which historical transaction data is generated. The invalid data may be the foregoing transaction data that fails to be verified. The expired transaction data or the invalid transaction data is periodically cleared. This can reduce a size of the target table, and improve storage resource usage.

According to a second aspect, this application provides a blockchain-based data processing method. The method is applied to the blockchain management device in the data processing system in the first aspect, and the blockchain system further includes a block producer and a database management device. The method includes: receiving one or more blocks sent by the block producer, where each block carries a plurality of pieces of transaction data; sending a plurality of first structured query language SQL statements to the database management device, where each first SQL statement includes one piece of first transaction data in the transaction data carried in the one or more blocks, and a block number and a transaction number of the piece of first transaction data, the block number indicates a block identifier of a block to which the piece of first transaction data belongs, the transaction number indicates an index of the piece of first transaction data in the plurality of pieces of transaction data of the block to which the piece of first transaction data belongs, the first SQL statement further includes a first field, and the first field indicates storing the piece of first transaction data; and receiving a message, indicating that the first transaction data is stored, that is returned by the data management device, and verifying the first transaction data based on the block number and the transaction number of the first transaction data.

In a possible implementation of the second aspect, the method further includes: synchronously sending the plurality of first structured query language SQL statements to the database management device and verifying second transaction data. The second transaction data is stored in the database system before the first transaction data.

In a possible implementation of the second aspect, the sending a plurality of first structured query language SQL statements to the database management device includes: sending the plurality of first structured query language SQL statements to the database management device in parallel.

In a possible implementation of the second aspect, the verifying the first transaction data or verifying second transaction data includes: sending a second SQL statement to the database management device, where the second SQL statement includes a second field, and a block number and a transaction number of transaction data that needs to be verified, the second field indicates the database management device to return validity information related to the transaction data that needs to be verified, and the transaction data that needs to be verified is the first transaction data or the second transaction data; receiving the validity information returned by the database management device; and verifying, based on the validity information, the transaction data that needs to be verified.

In a possible implementation of the second aspect, the method further includes: sending a third SQL statement to the database management device. The third SQL statement includes a third field, and a block number and a transaction number of transaction data that fails to be verified, and the third field indicates modifying validity information.

In a possible implementation of the second aspect, the method further includes: re-verifying transaction data that is verified after the transaction data that fails to be verified.

In a possible implementation of the second aspect, the method further includes: sending a fourth SQL statement to the database management device. The fourth SQL statement includes a fourth field, and the fourth field indicates clearing data.

For content in any one of the second aspect or the possible implementations of the second aspect, refer to corresponding content in any one of the first aspect or the possible implementations of the first aspect. Details are not described herein again.

According to a third aspect, this application provides a blockchain-based data processing method. The method is applied to the foregoing data processing system, and the data processing system further includes a blockchain management device. The method includes: receiving a plurality of first structured query language SQL statements from the blockchain management device, where each first SQL statement includes one piece of first transaction data in transaction data carried in one or more blocks, and a block number and a transaction number of the piece of first transaction data, the block number indicates a block identifier of a block to which the piece of first transaction data belongs, the transaction number indicates an index of the piece of first transaction data in a plurality of pieces of transaction data of the block to which the piece of first transaction data belongs, the first SQL statement further includes a first field, and the first field indicates storing the piece of first transaction data; storing the piece of first transaction data based on the first field, and storing a plurality of pieces of attribute information of the piece of first transaction data, where the plurality of pieces of attribute information include the block number and the transaction number of the piece of first transaction data, and validity information of the piece of first transaction data; and returning, to the blockchain management device, a message indicating that the first transaction data is stored.

In a possible implementation of the third aspect, the method further includes: receiving a second SQL statement from the blockchain management device, where the second SQL statement includes a second field, and a block number and a transaction number of transaction data that needs to be verified, and the second field indicates the database management device to return validity information related to the transaction data that needs to be verified; and returning, to the blockchain management device, the validity information based on the second field, and the block number and the transaction number of the transaction data that needs to be verified.

In a possible implementation of the third aspect, the method further includes: receiving a third SQL statement from the blockchain management device, where the third SQL statement includes a third field, and a block number and a transaction number of transaction data that fails to be verified, and the third field indicates modifying validity information; and modifying, based on the third field, and the block number and the transaction number of the transaction data that fails to be verified, the validity information of the transaction data that fails to be verified to be invalid.

In a possible implementation of the third aspect, the method further includes: receiving a fourth SQL statement from the blockchain management device, where the fourth SQL statement includes a fourth field, and the fourth field indicates clearing data; and clearing, based on the fourth field, expired transaction data or invalid transaction data, and a plurality of pieces of attribute information of cleared transaction data.

For content in any one of the third aspect or the possible implementations of the third aspect, refer to corresponding content in any one of the first aspect or the possible implementations of the first aspect. Details are not described herein again.

According to a fourth aspect, this application provides a blockchain management device, and the blockchain management device has a function of implementing the method in any one of the second aspect or the possible implementations of the second aspect. The function may be implemented by hardware, or may be implemented by hardware by executing corresponding software. The hardware or the software includes one or more modules, for example, a receiving unit, a processing unit, and a sending unit, corresponding to the function.

According to a fifth aspect, this application provides a database management device, and the database management device has a function of implementing the method in any one of the third aspect or the possible implementations of the third aspect. The function may be implemented by hardware, or may be implemented by hardware by executing corresponding software. The hardware or the software includes one or more modules, for example, a receiving unit, a sending unit, and a processing unit, corresponding to the function.

According to a sixth aspect, this application provides a blockchain management device. The blockchain management device includes at least one processor, a memory, an input/output (input/output, I/O) interface, and computer-executable instructions that are stored in the memory and that may be run on the processor. When the computer-executable instructions are executed by the processor, the processor performs the method in any one of the second aspect or the possible implementations of the second aspect.

According to a seventh aspect, this application provides a database management device. The database management device includes at least one processor, a memory, an input/output (input/output, I/O) interface, and computer-executable instructions that are stored in the memory and that may be run on the processor. When the computer-executable instructions are executed by the processor, the processor performs the method in any one of the third aspect or the possible implementations of the third aspect.

According to an eighth aspect, this application provides a computer-readable storage medium storing one or more computer-executable instructions. When executing the computer-executable instructions, a processor performs the method in any one of the second aspect or the possible implementations of the second aspect.

According to a ninth aspect, this application provides a computer-readable storage medium storing one or more computer-executable instructions. When executing the computer-executable instructions, a processor performs the method in any one of the third aspect or the possible implementations of the third aspect.

According to a tenth aspect, this application provides a computer program product storing one or more computer-executable instructions. When executing the computer-executable instructions, a processor performs the method in any one of the second aspect or the possible implementations of the second aspect.

According to an eleventh aspect, this application provides a computer program product storing one or more computer-executable instructions. When executing the computer-executable instructions, a processor performs the method in any one of the third aspect or the possible implementations of the third aspect.

According to a twelfth aspect, this application provides a chip system. The chip system includes at least one processor, and the at least one processor is configured to implement the function in any one of the second aspect or the possible implementations of the second aspect. In a possible design, the chip system may further include a memory. The memory is configured to store program instructions and data that are necessary for a blockchain management device. The chip system may include a chip, or may include a chip and another discrete device.

According to a thirteenth aspect, this application provides a chip system. The chip system includes at least one processor, and the at least one processor is configured to implement the function in any one of the third aspect or the possible implementations of the third aspect. In a possible design, the chip system may further include a memory. The memory is configured to store program instructions and data that are necessary for a database management system. The chip system may include a chip, or may include a chip and another discrete device.

In embodiments of this application, the transaction data is verified only after the transaction data is written into the database management device. Therefore, a plurality of pieces of transaction data can be synchronously written, to improve a speed of writing the transaction data into the database system.

### DESCRIPTION OF DRAWINGS

FIG. 1A is a schematic diagram of an embodiment of a blockchain-based data processing system according to an embodiment of this application;
FIG. 1B is a schematic diagram of another embodiment of a blockchain-based data processing system according to an embodiment of this application;
FIG. 1C is a schematic diagram of another embodiment of a blockchain-based data processing system according to an embodiment of this application;
FIG. 2 is a schematic diagram of an embodiment of a blockchain-based data processing method according to an embodiment of this application;
FIG. 3A and FIG. 3B are a schematic diagram of another embodiment of a blockchain-based data processing method according to an embodiment of this application;
FIG. 4 is a schematic diagram of an example scenario according to an embodiment of this application;
FIG. 5 is a schematic diagram of another example scenario according to an embodiment of this application;
FIG. 6 is a schematic diagram of an embodiment of a blockchain management device according to an embodiment of this application;
FIG. 7 is a schematic diagram of an embodiment of a database management device according to an embodiment of this application; and
FIG. 8 is a schematic diagram of a structure of a computer device according to an embodiment of this application.

### DESCRIPTION OF EMBODIMENTS

The following describes embodiments of this application with reference to the accompanying drawings. It is clear that the described embodiments are merely some rather than all of the embodiments of this application. A person of ordinary skill in the art may learn that, with technical development and emergence of a new scenario, the technical solutions provided in embodiments of this application are also applicable to a similar technical problem.

In the specification, claims, and accompanying drawings of this application, the terms "first", "second", "third", "fourth", and so on are intended to distinguish between similar objects but do not necessarily indicate a specific sequence or order. It should be understood that data termed in such a way is interchangeable in a proper circumstance, so that the embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

An embodiment of this application provides a blockchain-based data processing method, to improve a speed of writing transaction data in a blockchain into a database system. Embodiments of this application further provide a corresponding device, a computer storage medium, a computer program product, and the like. The following provides descriptions in detail.

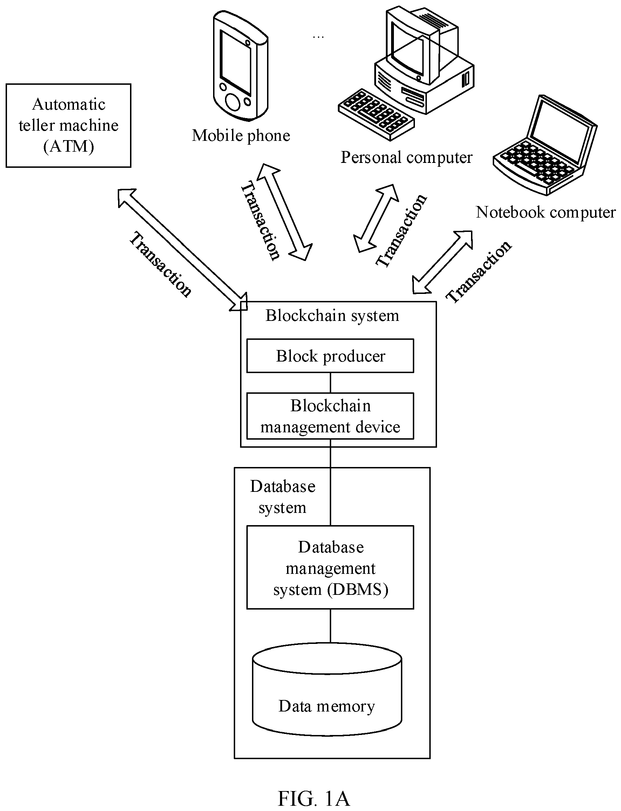

An embodiment of this application provides a data processing system. For a structure of the data processing system, refer to FIG. 1A.

As shown in FIG. 1A, a blockchain-based data processing system includes a blockchain system and a database system. The blockchain system includes a block producer and a blockchain management device. The database system includes a database management system (database management system, DBMS) and a data memory. In this application, the DBMS may also be referred to as a database management device. The block producer is communicatively connected to the blockchain management device. The block producer is configured to package transaction data generated by a terminal device into a block, and send the block to the blockchain management device. The blockchain management device is communicatively connected to the DBMS. The blockchain management device sends a structured query language (structured query language, SQL) statement to the DBMS. The SQL statement includes related information of the transaction data. The DBMS is communicatively connected to a data memory, stores the transaction data in the data memory, and manages the transaction data in the data memory.

In this embodiment of this application, the block producer and the blockchain management device may be independent physical machines, for example, servers, or virtual machines (virtual machine, VM) or containers (container). The terminal device (which may also be referred to as user equipment (user equipment, UE)) is a device having a wireless transceiver function, and may be deployed on land, for example, including an indoor or outdoor device, a handheld device, or a vehicle-mounted device, may be deployed on water (for example, on a ship), or may be deployed in the air (for example, on an airplane, a balloon, and a satellite). The terminal may be a terminal with a payment function, for example, a mobile phone (mobile phone), a tablet computer (pad), a computer with a wireless sending and receiving function, or an automatic teller machine (automatic teller machine, ATM).

The method provided in embodiments of this application may be applied to a single-server blockchain system and database system, or a cluster blockchain system and database system. The database system (database system) usually includes the following three parts: (1) A database (database, DB) is a set of organized and shareable data stored in a computer for a long time. The data in the database is organized, described, and stored according to a mathematical model, has relatively small redundancy, has relatively high data independence and easy scalability, and can be shared among various users. (2) Hardware, for example, a memory and/or a disk, includes a data memory required for data storage. (3) Software includes a DBMS. As core software of the database system, the DBMS is configured to scientifically organize and store data, and efficiently obtain and maintain data. A database engine is a core component of the DBMS.

Specifically, FIG. 1A is a schematic diagram of a single-server blockchain system and database system. In the single-server blockchain system and the single-server database system, the blockchain management device writes transaction data into the data memory by using the DBMS. The database management system is configured to provide services such as writing, querying, deleting, and modifying a database, and the database management system stores data in the data memory. In the single-server blockchain system, a block producer and a blockchain management device may be on a single server. In the database system, the database management system and the data memory are usually on a single server, for example, a symmetric multi-processing (symmetric multi-processing, SMP) server. The SMP server includes a plurality of processors, and all the processors share resources, such as a bus, a memory, and an I/O system. A function of the database management system may be implemented by executing a program in the memory by one or more processors.

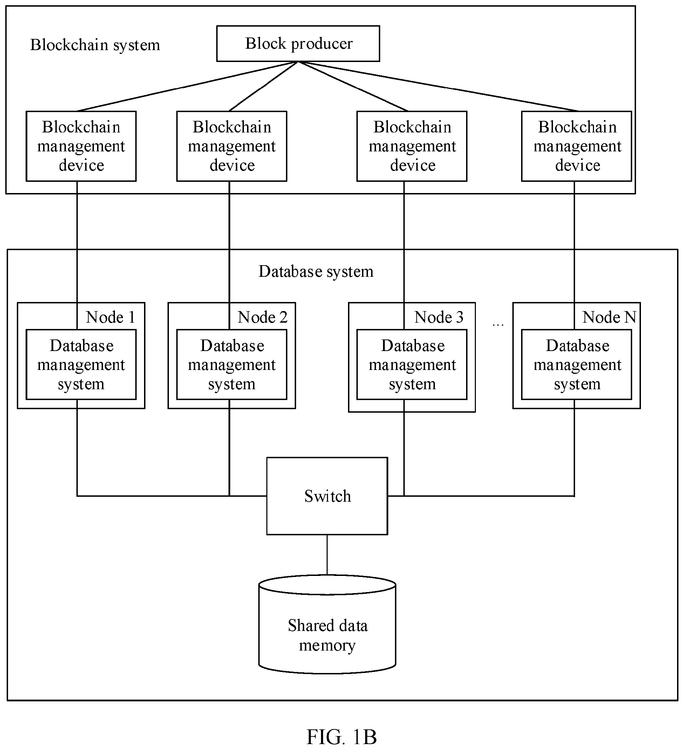

FIG. 1B is a schematic diagram of a cluster blockchain system and database system with a shared-storage (shared-storage) architecture. The blockchain system includes one block producer and a plurality of blockchain devices. It is clear that there may be a plurality of block producers, or one block producer may correspond to one blockchain device. A correspondence between the block producer and the blockchain device is not limited in this application. The database system includes a plurality of nodes (for example, a node 1 to a node N in FIG. 1B). A database management system is deployed on each node, and services such as querying and modifying a database are separately provided for a user. A plurality of database management systems store shared data in a shared data memory, and perform a read/write operation on the data in the data memory by using a switch. One blockchain device may correspond to one database management system. The shared data memory in the database system may be a shared disk array. A node in a cluster database system may be a physical machine, for example, a database server, or may be a virtual machine or a container running on an abstract hardware resource. When the node is a virtual machine or a container, a database management system deployed in the node is a DBMS instance (instance), and the DBMS may be a process or a thread. If the node is a physical machine, a switch is a storage area network (storage area network, SAN) switch, an Ethernet switch, an optical fiber switch, or another physical switching device. If the node is a virtual machine or a container, the switch is a virtual switch.

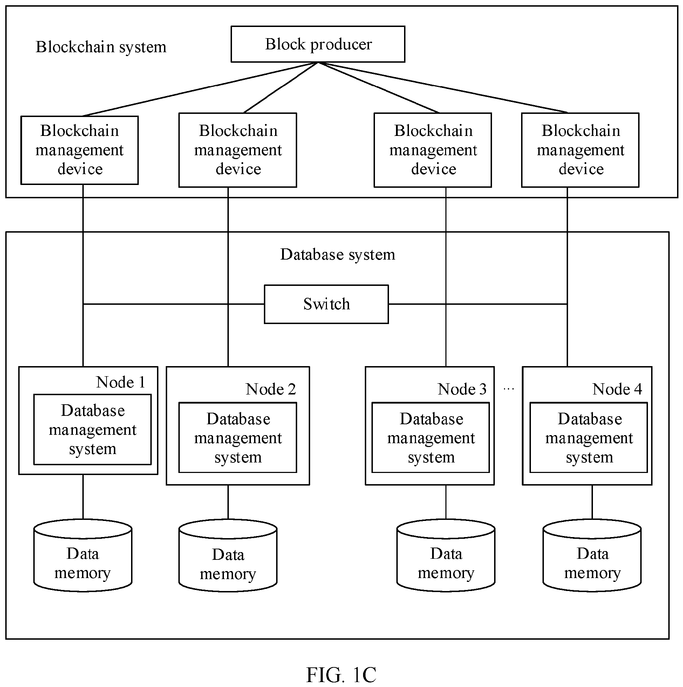

FIG. 1C is a schematic diagram of a cluster database system with a shared-nothing (shared-nothing) architecture. Each node has an exclusive hardware resource (for example, a data memory), operating system, and database, and nodes communicate with each other by using a network. In the system, data is distributed to the nodes based on a database model and an application feature. A query task is divided into several portions, to be executed concurrently on all the nodes. All the nodes perform calculation coordinately and are used as a whole to provide a database service. All communication functions are implemented in a high-bandwidth network interconnection system. Similar to the node of the cluster database system with the shared-storage architecture described in FIG. 1B, the node herein may be a physical machine or a virtual machine.

In all embodiments of this application, the data memory (data storage) of the database system includes but is not limited to a solid-state drive (solid-state drive, SSD), a disk array, or a non-transitory computer-readable medium of another type. Although a database is not shown in FIG. 1A to FIG. 1C, it should be understood that the database is stored in the data memory. A person skilled in the art may understand that a database system may include components more or less than those shown in FIG. 1A to FIG. 1C, or include components different from those shown in FIG. 1A to FIG. 1C. FIG. 1A to FIG. 1C merely show components more related to implementations disclosed in embodiments of this application. For example, although four nodes are described in FIG. 1B and FIG. 1C, a person skilled in the art may understand that a cluster database system may include any quantity of nodes. A database management system function of each node may be implemented by using an appropriate combination of software, hardware, and/or firmware on the node.

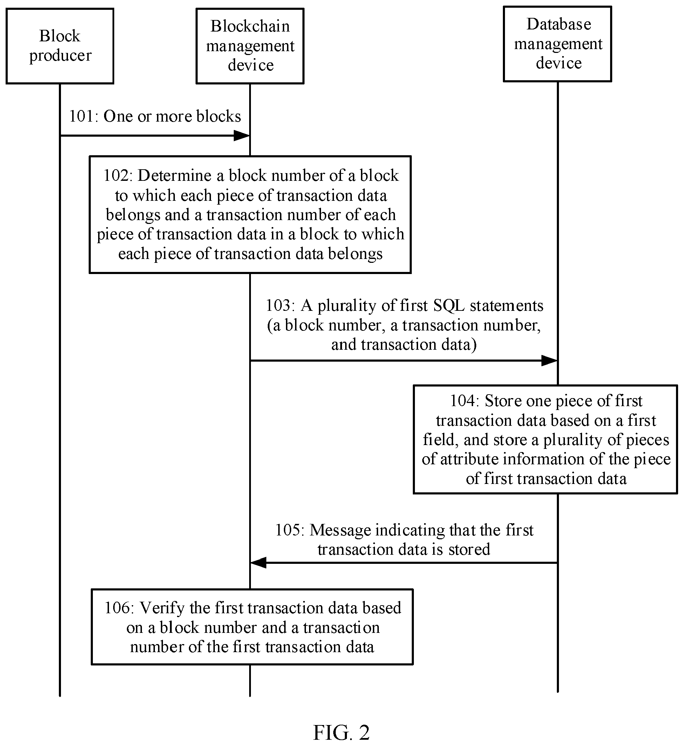

In the blockchain-based data processing system, the blockchain management device and the database management device perform the blockchain-based data processing method in this application. The following describes a blockchain-based data processing method according to an embodiment of this application with reference to FIG. 2.

As shown in FIG. 2, an embodiment of a blockchain-based data processing method according to an embodiment of this application includes the following steps.

101: Ablockchain management device receives one or more blocks sent by a block producer, where each block carries a plurality of pieces of transaction data.

Data in a blockchain system is stored in a form of a block, and one block includes a plurality of pieces of transaction data. The transaction data is sequentially stored in the block, and one block is a set of a plurality of pieces of transaction data that are continuously generated. The "transaction data" is data generated by a user based on a service operation.

In this application, "a plurality of" includes two or more, or may be described as at least two.

102: The blockchain management device determines a block number of a block to which each piece of transaction data belongs and a transaction number of each piece of transaction data in a block to which each piece of transaction data belongs.

The block number indicates a block identifier of a block to which one piece of transaction data belongs, and the transaction number indicates an index of one piece of transaction data in a plurality of pieces of transaction data of the block to which the piece of transaction data belongs.

Because each piece of transaction data belongs to a block, and a number of a block in the blockchain system is unique, each piece of transaction data has a corresponding block number. Transaction data in a same block is sequentially numbered, namely, a transaction number of the transaction data. The transaction number is an index of the transaction data in the block, or may be represented as a sequence identifier or a location identifier of the transaction data in the block. A block number of each piece of transaction data in a same block is different, and transaction numbers in different blocks may be the same. Therefore, a block number and a transaction number can be used to uniquely locate a piece of transaction data. When parsing transaction data in a block, the blockchain management device may determine a block number and a transaction number of each piece of transaction data.

103: The blockchain management device sends a plurality of first structured query language SQL statements to a database management device, and correspondingly, the database management device receives the plurality of first SQL statements.

Each first SQL statement includes one piece of first transaction data in the transaction data carried in the one or more blocks, and a block number and a transaction number of the piece of first transaction data, the block number indicates a block identifier of a block to which the piece of first transaction data belongs, the transaction number indicates an index of the piece of first transaction data in a plurality of pieces of transaction data of the block to which the piece of first transaction data belongs, the first SQL statement further includes a first field, and the first field indicates storing the piece of first transaction data.

In this application, a database system is a database system that supports an SQL. The blockchain management device needs to edit each piece of transaction data into a form of a first SQL statement and send the first SQL statement to a DBMS, and the DBMS parses the SQL statement, to complete writing of the transaction data into a data memory. The first field of the first SQL statement indicates storing the transaction data, and the first SQL statement includes the block number and the transaction number of the transaction data. Therefore, the database management device stores the transaction data into the data memory. The database management device may maintain a plurality of pieces of attribute information of each piece of transaction data in a form of a correspondence. For the plurality of pieces of transaction data, attributes of the plurality of pieces of transaction data may be maintained in a form of a target table. Several new attributes, for example, a "block number (block num)" column and a "transaction number (tx_num)" column, may be added to the attributes of the target table based on the original table for maintaining blockchain data. A "deletion operation (isDelete)" column and a "valid (isValid)" column may also be added. If an operation is deletion, "true" may be filled in the column. If an operation is not deletion, "false" may be filled in the column. In the isValid column, "true" is filled when transaction data is initially written. It is clear that the attributes of the target table are not limited to the foregoing types, and may further include a start location of a storage address of the transaction data in the data memory, a length of the transaction data, and the like.

For the target table, refer to an example shown in Table 1.

**Table 1: Target table**

| Primary key | Block number | Transaction number | Delete (isDelete) | Valid (isValid) |
|---|---|---|---|---|
| Luo San | 3 | 0 | True | True |
| Luo San | 3 | 100 | False | True |
| Luo San | 6 | 2 | False | True |
| Luo San | 8 | 4 | False | True |
| Long Da | 6 | 2 | False | True |

The isDelete (isDelete) column indicates that if transaction data corresponds to a deletion (delete) operation, a flag bit of the transaction data corresponding to the isDelete (isDelete) column in the target table is true.

An initial valid flag bit (isValid) is true. If a verification result of the transaction data written into the isValid row is invalid (invalid), the isValid row is changed to false. It indicates that transaction data corresponding to the row is invalid.

The primary key is a unique identifier used by the database management device to record transaction data corresponding to an object, and the primary key is used to describe an attribute, for example, an account name or a card number, of transaction data.

Table 1 is only an example. Actually, a quantity of rows in the target table may be large.

104: The database management device stores the piece of first transaction data based on the first field, and stores a plurality of pieces of attribute information of the piece of first transaction data.

The plurality of pieces of attribute information include the block number and the transaction number of the piece of first transaction data, and validity information of the piece of first transaction data.

For the correspondence, refer to any row in Table 1.

105: The database management device returns, to the blockchain management device, a message indicating that the first transaction data is stored, and correspondingly, the blockchain management device receives the message, indicating that the first transaction data is stored, that is returned by the database management device.

The database management device may return a plurality of messages to the blockchain management device, and the plurality of messages indicating that the first transaction data is stored indicate that the first transaction data of the plurality of first SQL statements is stored in the database system.

106: The blockchain management device verifies the first transaction data based on the block number and the transaction number of the first transaction data.

The blockchain management device is configured to verify whether transaction data of a block is valid. Whether the transaction data is valid usually indicates whether an operation in which the transaction data is generated succeeds. For example, the operation is a transfer transaction. If the transfer transaction fails, transaction data generated during the transfer is invalid.

In this embodiment of this application, the transaction data is verified only after the transaction data is written into the database management device. Therefore, a plurality of pieces of transaction data can be synchronously written, to improve a speed of writing the transaction data into the database system.

The blockchain management device is further configured to synchronously send the plurality of first structured query language SQL statements to the database management device and verify second transaction data. The second transaction data is stored in the database system before the first transaction data.

In this application, synchronous execution indicates execution in parallel. When the first transaction data is written, the second transaction data that is previously written into the database system may be synchronously verified. Therefore, the first transaction data may be written and the second transaction data may be verified at the same time. For example, if the second transaction data in a block 1, a block 2, and a block 3 is written into the database system, and the first transaction data in a block 4, a block 5, and a block 6 is being written, the second transaction data in the block 4, the block 5, and the block 6 may be written and the first transaction data in the block 1, the block 2, and the block 3 may be verified at the same time. It can be learned that, for different transaction data, writing and verification may be performed in parallel in the first aspect. This improves a speed of processing transaction data.

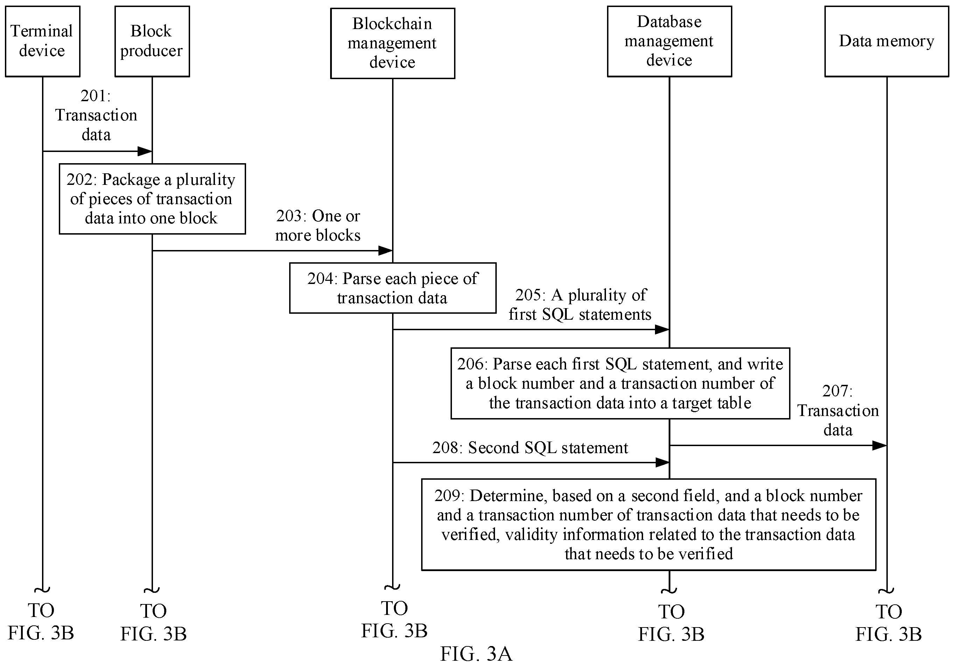

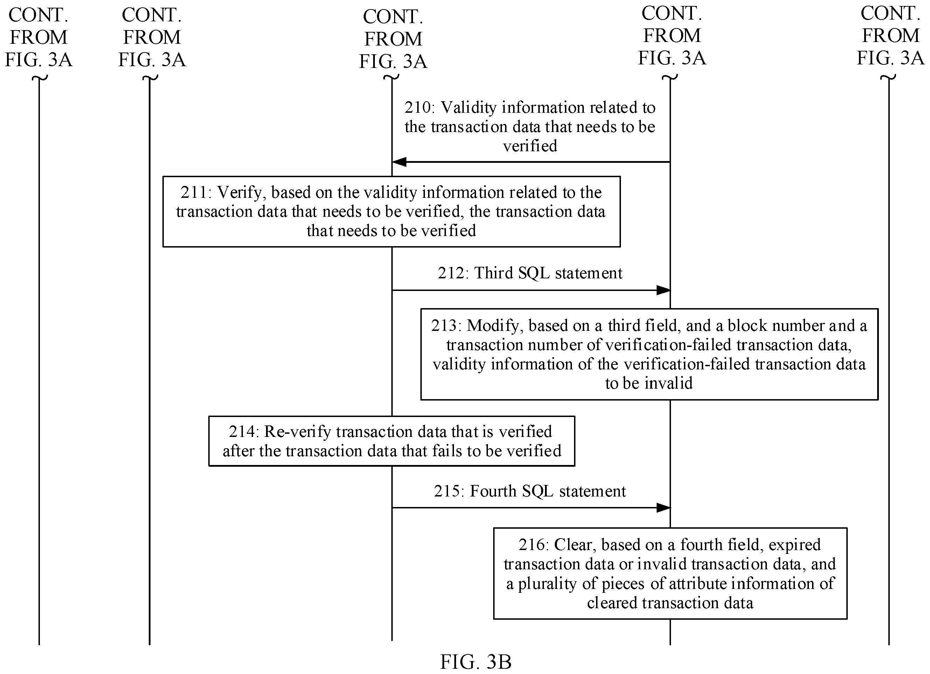

For another embodiment of the blockchain-based data processing method, refer to FIG. 3A and FIG. 3B.

As shown in FIG. 3A and FIG. 3B, another embodiment of the blockchain-based data processing method includes the following steps.
201: A block producer receives transaction data sent by a terminal device.
202: The block producer packages a plurality of pieces of transaction data into one block.

Usually, a quantity of pieces of transaction data included in one block is pre-configured. For example, one block includes 500 pieces of transaction data.
203: The block producer sends one or more blocks to a blockchain management device, and correspondingly, the blockchain management device receives the one or more blocks.
204: The blockchain management device parses each piece of transaction data from the block.

When parsing the transaction data from the block, the blockchain management device obtains a block number of a block to which the transaction data belongs and a transaction number of the transaction data in the block to which the transaction data belongs.
205: The blockchain management device sends a plurality of first SQL statements to a database management device.
206: The database management device parses each first SQL statement, and writes the block number and the transaction number of the transaction data into the target table.
207: The database management device stores the transaction data in the data memory.

For understanding of step 203 to step 207, refer to the embodiment corresponding to FIG. 2.

208: The blockchain management device sends a second SQL statement to the database management device.

The second SQL statement includes a second field, and a block number and a transaction number of transaction data that needs to be verified, and the second field indicates the database management device to return validity information related to the transaction data that needs to be verified. The transaction data that needs to be verified may be first transaction data or second transaction data.

209: The database management device determines, based on the second field, and the block number and the transaction number of the transaction data that needs to be verified, validity information related to the transaction data that needs to be verified.

In this embodiment of this application, the validity information may be validity information of latest transaction data generated before the transaction data that needs to be verified, and the returned validity information may alternatively be one piece of corresponding validity information that is returned for one primary key. One or more pieces of validity information is validity information, corresponding to at least one primary key, of latest transaction data generated before the transaction data that needs to be verified, and the primary key is an identifier used by the database management device to record transaction data corresponding to an object.

The process may alternatively be returning a database view table, and the database view table includes validity information, corresponding to one or more primary keys, of latest transaction data generated before the transaction data that needs to be verified.

A process of determining the corresponding database view table from the target table is a data selecting process, and the target table includes attribute information of transaction data in a plurality of rows.

In this application, to-be-written transaction data may be written and written transaction data may be verified at the same time. Therefore, a plurality of pieces of attribute information of some pieces of transaction data in the target table are generated before the transaction data that needs to be verified. A plurality of attribute information of some pieces of transaction data are generated after the transaction data that needs to be verified. For the plurality of pieces of attribute information of transaction data that are generated after the transaction data that needs to be verified, verification of the transaction data that needs to be verified is not affected. Therefore, only attribute information of transaction data that is generated before the transaction data that needs to be verified needs to be selected.

It is considered that previously generated transaction data includes a plurality of pieces of transaction data of a same primary key. The primary key may be, for example, an account name, and the plurality of pieces of transaction data of a same primary key may be understood as data generated by a plurality of transaction operations of a same account name. Because data in the account name is continuously updated due to the plurality of operations, only a plurality of pieces of attribute information of transaction data generated by a last transaction operation is meaningful to the transaction data that needs to be verified. Therefore, the database view table only includes a plurality of pieces of attribute information of latest transaction data, and the latest transaction data is data generated in a last transaction of a same primary key before the transaction data that needs to be verified. For example, if 1000 yuan is deposited in an account for the first time, a balance in the account is 1000 yuan. In the second time, 500 yuan is transferred from the account, the balance in the account is 500 yuan. In the third time, 300 yuan is deposited in the account, the balance in the account is 800 yuan. Only third transaction data is meaningful. Two pieces of previous transaction data are modified by a third transaction. Because transaction data that needs to be verified is generated in the third transaction, only the third transaction data is meaningful to the transaction data that needs to be verified.

When the database system does not learn of a primary key to which the transaction data verified by the blockchain management device belongs, the database view table returns attribute information of latest transaction data of each primary key that is generated before the transaction data that needs to be verified.

For the process, refer to the following example. If a block number of the verified transaction data is 5, and a transaction number is 1, which may be represented as {5, 1}, the database management device may select, from Table 1 according to the selection rule described above, a database view table shown in Table 2.

**Table 2: Database view table selected based on {5, 1}**

| Primary key | Block number | Transaction number | Delete (isDelete) | Valid (isValid) |
|---|---|---|---|---|
| Luo San | 3 | 100 | False | True |

Based on the block number 5 and the transaction number 1, it may be determined from Table 1 that there are two rows, namely, a first row and a second row, located in the block 5. Because a transaction number of the first row is 1, and a transaction number of the second row is 100, it may be determined that transaction data corresponding to the second row is generated after transaction data corresponding to the first row. Therefore, transaction data, corresponding to the primary key "Luo San", of a last transaction that is generated before the transaction data with the block number of 5 and the transaction number of 1 is selected in Table 2.

If there are a plurality of second SQL statements, one second SQL statement corresponds to one piece of transaction data that needs to be verified. Then, the database management device selects a corresponding database view table for each piece of data that needs to be verified, and one database view table corresponds to one piece of transaction data that needs to be verified.

For example, in addition to the second SQL statement including {5, 1}, another second SQL statement includes {7, 3}, and another second SQL statement includes {8, 5}. According to the principle of selecting a database view table corresponding to {5, 1}, Table 3 may be selected based on {7, 3 1, and Table 4 may be selected based on t8, 51.

**Table 3: Database view table selected based on {7, 3}**

| Primary key | Block number | Transaction number | Delete (isDelete) | Valid (isValid) |
|---|---|---|---|---|
| Luo San | 6 | 2 | False | True |
| Long Da | 6 | 2 | False | True |

It can be seen from Table 3 that two transactions with different account names appear in a transaction before the block 7, namely, "Luo San" and "Long Da". For each account name, a row in which transaction data corresponding to a last transaction is located in the target table is selected.

**Table 4: Database view table selected based on {8, 5}**

| Primary key | Block number | Transaction number | Delete (isDelete) | Valid (isValid) |
|---|---|---|---|---|
| Luo San | 8 | 4 | False | True |
| Long Da | 6 | 2 | False | True |

A selection process of Table 4 is the same as the selection process of Table 2 and Table 3, and details are not repeatedly described herein.

210: The database management device sends the validity information related to the transaction data that needs to be verified to the blockchain management device, and correspondingly, the blockchain management device receives the validity information related to the transaction data that needs to be verified.

In this embodiment of this application, the database view table may alternatively be returned. The database view table includes at least one primary key and at least one piece of corresponding validity information.

211: The blockchain management device verifies, based on the validity information related to the transaction data that needs to be verified, the transaction data that needs to be verified.

In this embodiment of this application, the transaction data that needs to be verified may alternatively be verified based on the database view table.

In the database view table, when validity information of the latest transaction data indicates that the latest transaction data is invalid, the transaction data that needs to be verified is invalid.

The blockchain management device first determines whether transaction data indicated by description information in the database view table is valid. If the transaction data is valid, the blockchain management device re-verifies the transaction data that needs to be verified. If the transaction data is invalid, it indicates that previous transaction data on which the transaction data that needs to be verified depends is incorrect, and a current transaction is invalid. Then, the transaction data that needs to be verified is re-verified. This improves accuracy of verifying transaction data.

For example, a balance of an account is 0, and 1000 yuan is deposited in a first transaction. However, the transaction fails, and the balance of the account is still 0. If 500 yuan is to be transferred from the account in a second transaction, the second transaction fails. If it is determined that the first transaction fails, it is unnecessary to verify transaction data of the second transaction, and it may be directly determined that the second transaction fails. If the previous transaction succeeds, whether the current transaction succeeds may be determined through data comparison, for example, determining whether the balance includes the deposited 1000 yuan.

If the blockchain management device receives a plurality of database view tables, the blockchain management device may perform verification by using respective database view tables. Because each transaction that needs to be verified has a corresponding database view table, a plurality of transactions in a same block and a plurality of transactions in different blocks can be verified in parallel. This greatly improves a speed of verifying transaction data.

A plurality of pieces of transaction data that are verified in parallel may be transaction data in a same block or transaction data in different blocks.

212: The blockchain management device sends a third SQL statement to the database management device.

The third SQL statement includes a third field, and a block number and a transaction number of transaction data that fails to be verified, and the third field indicates modifying validity information.

213: The database management device modifies, based on the third field, and the block number and the transaction number of the transaction data that fails to be verified, the validity information of the transaction data that fails to be verified to be invalid.

For the process, refer to the first row in Table 1. As shown in Table 5, the first row in Table 1 is an entry generated by a deletion operation, and the entry is still valid. If the block number and the transaction number in the third SQL statement received by the database management device are {3, 0}, a flag bit of the is Valid entry in the first row in Table 1 is changed from true to false. Then, Table 1 becomes Table 5.

**Table 5: Target table**

| Primary key | Block number | Transaction number | Delete (isDelete) | Valid (isValid) |
|---|---|---|---|---|
| Luo San | 3 | 0 | True | **False** |
| Luo San | 3 | 100 | False | True |
| Luo San | 6 | 2 | False | True |
| Luo San | 8 | 4 | False | True |
| Long Da | 6 | 2 | False | True |

214: The blockchain management device re-verifies transaction data that is verified after the transaction data that fails to be verified.

If other transaction data is further verified after the transaction data that fails to be verified, to ensure accuracy of the transaction data, transaction data that is verified after the transaction data that fails to be verified is re-verified in this application. This improves accuracy of verifying transaction data.

For example, if transaction data {3, 1}, {3, 2}, and {3, 3} is verified after the transaction data {3, 0} is verified, the transaction data {3, 1}, {3, 2}, and {3, 3} needs to be re-verified.

215: The blockchain management device sends a fourth SQL statement to the database management device.

The fourth SQL statement includes a fourth field, and the fourth field indicates clearing data.

216: The database management device clears, based on the fourth field, expired transaction data or invalid transaction data, and a plurality of pieces of attribute information of cleared transaction data.

The expired transaction data may be a subsequent transaction operation performed on the account, and data generated in a previous transaction is of no use. The expired transaction data may be determined based on time at which historical transaction data is generated. The invalid data may be the foregoing transaction data that fails to be verified.

For example, if the transaction data {3, 0} is invalid data, the invalid transaction may be deleted, and the first row in the target table is also deleted. Then, after the first row is deleted, Table 5 becomes Table 6.

**Table 6: Cleared target table**

| Primary key | Block number | Transaction number | Delete (isDelete) | Valid (isValid) |
|---|---|---|---|---|
| Luo San | 3 | 100 | False | True |
| Luo San | 6 | 2 | False | True |
| Luo San | 8 | 4 | False | True |
| Long Da | 6 | 2 | False | True |

The expired transaction data or the invalid transaction data, and corresponding attribute information are periodically cleared. This can reduce a size of the target table, and improve storage resource usage.

In this embodiment of this application, writing (insert), verification, and re-verification (confirm) of transaction data may be performed in parallel, and blocks processed during execution in parallel are different. When the three phases are performed in parallel, a block processed in the re-verification phase is a block in which transaction data is verified, a block processed in the verification phase is a block in which writing is completed, and a block processed in a writing phase is a block newly sent by a block producer.

In this embodiment of this application, the block in the writing phase is referred to as a first block, the block in the verification phase is referred to as a second block, and the block in the re-verification phase is referred to as a third block. In this application, there may be one or more first blocks. Similarly, there may be one or more second blocks and three blocks.

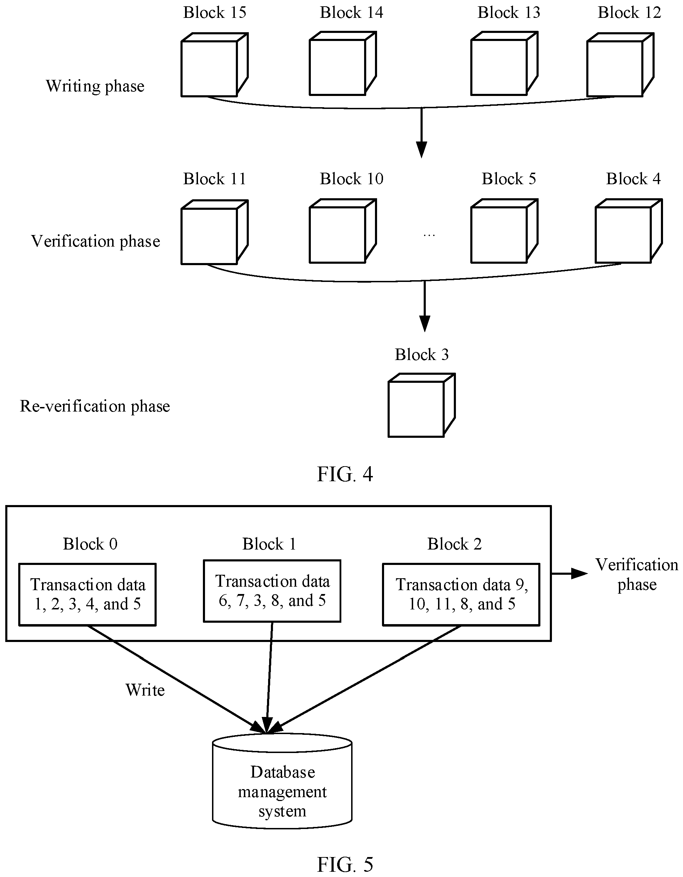

For a process in which the three phases are performed in parallel, refer to FIG. 4. As shown in FIG. 4, in the writing phase, for example, there are four first blocks: a block 12, a block 13, a block 14, and a block 15. In the verification phase, for example, there are eight second blocks: a block 4, and a block 5 to a block 11. In the re-verification phase, for example, there is one third block: a block 3.

For the writing phase, refer to step 203 to step 207 in the foregoing embodiment. For the verification phase, refer to step 208 to step 213 in the foregoing embodiment. For the re-verification phase, refer to step 214 in the foregoing embodiment.

After the blockchain management device completes tasks of phases in which the blocks in the different phases are located, the blocks in different phases sequentially enter a next phase. For example, the block 4, the block 5, and the block 11 that are in the verification phase are sequentially from the writing phase, and sequentially enter the verification phase only after the writing phase is completed. In the block 11 shown in FIG. 4, the block 11 enters the verification phase only after the block 10 enters the verification phase. As shown in FIG. 5, a block 0, a block 1, and a block 2 are used as an example. The three blocks enter a verification phase only after writing into the database management device is completed.

Similarly, after the blockchain management device completes the task of the verification phase, and the block 3 includes transaction data that fails to be verified, the block 3 enters the re-verification phase, and transaction data that is verified after the transaction data that fails to be verified needs to be re-verified.

The foregoing describes the blockchain-based data processing method. The following describes a blockchain management device according to an embodiment of this application with reference to the accompanying drawings.

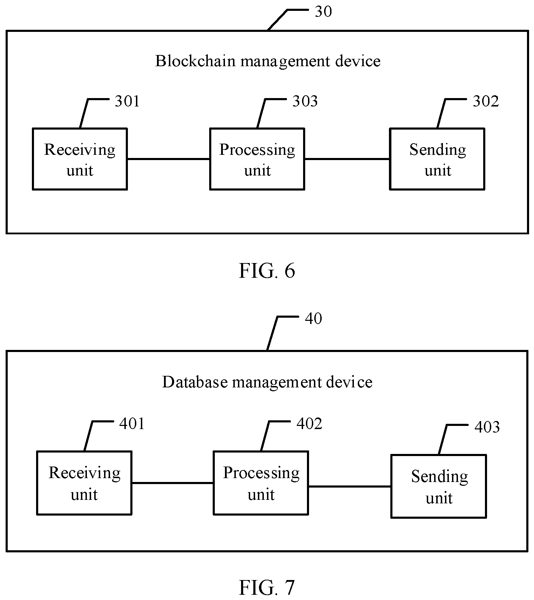

As shown in FIG. 6, an embodiment of a blockchain management device 30 provided in this embodiment of this application includes: The blockchain management device 30 is applied to a data processing system, the blockchain system further includes a block producer and a database management device, and the blockchain management device includes:
a receiving unit 301, configured to receive one or more blocks sent by the block producer, where each block carries a plurality of pieces of transaction data;
a sending unit 302, configured to send a plurality of first structured query language SQL statements to the database management device, where each first SQL statement includes one piece of first transaction data in the transaction data carried in the one or more blocks, and a block number and a transaction number of the piece of first transaction data, the block number indicates a block identifier of a block to which the piece of first transaction data belongs, the transaction number indicates an index of the piece of first transaction data in the plurality of pieces of transaction data of the block to which the piece of first transaction data belongs, the first SQL statement further includes a first field, and the first field indicates storing the piece of first transaction data, where
the receiving unit 301 is further configured to receive, from the blockchain management device, a message indicating that the first transaction data is stored; and
a processing unit 303, configured to verify the first transaction data based on the block number and the transaction number of the first transaction data.

In this embodiment of this application, the transaction data is verified only after the transaction data is written into the database management device. Therefore, a plurality of pieces of transaction data can be synchronously written, to improve a speed of writing the transaction data into a database system.

Optionally, the processing unit 303 is further configured to synchronously send the plurality of first structured query language SQL statements to the database management device and verify second transaction data. The second transaction data is stored in the database system before the first transaction data.

Optionally, the sending unit 302 is configured to send the plurality of first structured query language SQL statements to the database management device in parallel.

Optionally, the sending unit 302 is further configured to send a second SQL statement to the database management device. The second SQL statement includes a second field, and a block number and a transaction number of transaction data that needs to be verified, the second field indicates the database management device to return validity information related to the transaction data that needs to be verified, and the transaction data that needs to be verified is the first transaction data or the second transaction data.

The receiving unit 301 is further configured to receive the validity information returned by the database management device.

The processing unit 303 is configured to verify, based on the validity information, the transaction data that needs to be verified.

Optionally, the sending unit 302 is further configured to send a third SQL statement to the database management device. The third SQL statement includes a third field, and a block number and a transaction number of transaction data that fails to be verified, and the third field indicates modifying validity information.

Optionally, the processing unit 303 is further configured to re-verify transaction data that is verified after the transaction data that fails to be verified.

Optionally, the sending unit 302 is further configured to send a fourth SQL statement to the database management device. The fourth SQL statement includes a fourth field, and the fourth field indicates clearing data.

For the blockchain management device 30, refer to corresponding descriptions in the method embodiments. Details are not described herein again.

As shown in FIG. 7, an embodiment of a database management device 40 is provided in this embodiment of this application. The database management device 40 is applied to a data processing system, the data processing system further includes a blockchain management device, and the database management device 40 includes:
a receiving unit 401, configured to receive a plurality of first structured query language SQL statements from the blockchain management device, where each first SQL statement includes one piece of first transaction data in transaction data carried in one or more blocks, and a block number and a transaction number of the piece of first transaction data, the block number indicates a block identifier of a block to which the piece of first transaction data belongs, the transaction number indicates an index of the piece of first transaction data in a plurality of pieces of transaction data of the block to which the piece of first transaction data belongs, the first SQL statement further includes a first field, and the first field indicates storing the piece of first transaction data;
a processing unit 402, configured to store the piece of first transaction data based on the first field, and store a plurality of pieces of attribute information of the piece of first transaction data, where the plurality of pieces of attribute information include the block number and the transaction number of the piece of first transaction data, and validity information of the piece of first transaction data; and
a sending unit 403, configured to return, to the blockchain management device, a message indicating that the first transaction data is stored.

Optionally, the receiving unit 401 is further configured to receive a second SQL statement from the blockchain management device. The second SQL statement includes a second field, and a block number and a transaction number of transaction data that needs to be verified, and the second field indicates the database management device to return validity information.

The processing unit 402 is further configured to determine the validity information based on the second field, and the block number and the transaction number of the transaction data that needs to be verified.

The sending unit 403 is configured to send the validity information to the blockchain management device.

Optionally, the receiving unit 401 is further configured to receive a third SQL statement from the blockchain management device. The third SQL statement includes a third field, and a block number and a transaction number of transaction data that fails to be verified, and the third field indicates modifying validity information.

The processing unit 402 is further configured to modify, based on the third field, and the block number and the transaction number of the transaction data that fails to be verified, the validity information of the transaction data that fails to be verified to be invalid.

Optionally, the receiving unit 401 is further configured to receive a fourth SQL statement from the database management device. The fourth SQL statement includes a fourth field, and the fourth field indicates clearing data.

The processing unit 402 is further configured to clear, based on the fourth field, expired transaction data or invalid transaction data, and a plurality of pieces of attribute information of cleared transaction data.

For the database management device 40, refer to corresponding descriptions of the database management device in the method embodiments. Details are not described herein again.

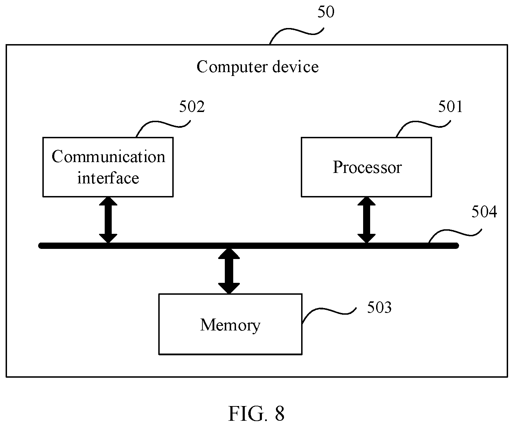

FIG. 8 is a schematic diagram of a possible logical structure of a computer device 50 according to an embodiment of this application. The computer device 50 may be the blockchain management device 30 and the database management device 40. The computer device 50 includes a processor 501, a communication interface 502, a memory 503, and a bus 504. The processor 501, the communication interface 502, and the memory 503 are connected to each other through the bus 504. In this embodiment of this application, the processor 501 is configured to control and manage an action of the blockchain management device 30 or the database management device 40. For example, the processor 501 is configured to perform a process of transaction data parsing, verification, re-verification, and target table maintenance in the method embodiments in FIG. 2 to FIG. 5. The communication interface 502 is configured to support the blockchain management device 50 in performing communication. The memory 503 is configured to store program code and data of the blockchain management device 50.

The processor 501 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 501 may be a combination of processors implementing a computing function, for example, a combination of one or more microprocessors, or a combination of a digital signal processor and a microprocessor. The bus 504 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one bold line in FIG. 8. However, it does not indicate that there is only one bus or only one type of bus.

According to another embodiment of this application, a computer-readable storage medium is further provided. The computer-readable storage medium stores computer-executable instructions. When a processor of a device executes the computer-executable instructions, the device performs the blockchain-based data processing method in FIG. 2 to FIG. 5.

According to another embodiment of this application, a computer program product is further provided. The computer program product includes computer-executable instructions, and the computer-executable instructions are stored in a computer-readable storage medium. When a processor of a device executes the computer-executable instructions, the device performs the blockchain-based data processing method in FIG. 2 to FIG. 5.

According to another embodiment of this application, a chip system is further provided. The chip system includes a processor. The processor is configured to implement the blockchain-based data processing method in FIG. 2 to FIG. 5. In a possible design, the chip system may further include a memory. The memory is configured to store program instructions and data that are necessary for the inter-process communication apparatus. The chip system may include a chip, or may include a chip and another discrete device.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device, or the like) to perform all or some of the steps of the methods described in embodiments of this application. The foregoing storage medium includes various media that can store program code, such as a USB flash drive, a removable hard disk drive, a read-only memory (Read-Only Memory, ROM), a random access memory (Random Access Memory, RAM), a magnetic disk, and an optical disc.

The foregoing descriptions are merely specific implementations of embodiments of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A data processing system, wherein the data processing system comprises a block producer, a blockchain management device, and a database management device;
the blockchain management device is configured to: receive one or more blocks sent by the block producer, wherein each block carries a plurality of pieces of transaction data; and send a plurality of first structured query language SQL statements to the database management device, wherein each first SQL statement comprises one piece of first transaction data in the transaction data carried in the one or more blocks, and a block number and a transaction number of the piece of first transaction data, the block number indicates a block identifier of a block to which the piece of first transaction data belongs, the transaction number indicates an index of the piece of first transaction data in the plurality of pieces of transaction data of the block to which the piece of first transaction data belongs, the first SQL statement further comprises a first field, and the first field indicates storing the piece of first transaction data;
the database management device is configured to: store the piece of first transaction data based on the first field, and store a plurality of pieces of attribute information of the piece of first transaction data, wherein the plurality of pieces of attribute information comprise the block number and the transaction number of the piece of first transaction data, and validity information of the piece of first transaction data; and return, to the blockchain management device, a message indicating that the first transaction data is stored; and
the blockchain management device is further configured to: receive the message, indicating that the first transaction data is stored, that is returned by the data management device, and verify the first transaction data based on the block number and the transaction number of the first transaction data.

2. The data processing system according to claim 1, wherein
the blockchain management device is further configured to synchronously send the plurality of first structured query language SQL statements to the database management device and verify second transaction data, wherein the second transaction data is stored in the database system before the first transaction data.

3. The data processing system according to claim 1 or 2, wherein the blockchain management device sends the plurality of first SQL statements in parallel.

4. The data processing system according to any one of claims 1 to 3, wherein
the blockchain management device is configured to send a second SQL statement to the database management device, wherein the second SQL statement comprises a second field, and a block number and a transaction number of transaction data that needs to be verified, and the second field indicates the database management device to return validity information related to the transaction data that needs to be verified;
the database management device is further configured to return the validity information based on the second field, and the block number and the transaction number of the transaction data that needs to be verified; and
the blockchain management device is configured to: receive the validity information returned by the database management device, and verify, based on the validity information, the transaction data that needs to be verified.

5. The data processing system according to any one of claims 1 to 4, wherein
the blockchain management device is further configured to send a third SQL statement to the database management device, wherein the third SQL statement comprises a third field, and a block number and a transaction number of transaction data that fails to be verified, and the third field indicates modifying validity information; and
the database management device is further configured to modify, based on the third field, and the block number and the transaction number of the transaction data that fails to be verified, the validity information of the transaction data that fails to be verified to be invalid.

6. The data processing system according to claim 5, wherein
the blockchain management device is further configured to re-verify transaction data that is verified after the transaction data that fails to be verified.

7. The data processing system according to any one of claims 1 to 6, wherein
the blockchain management device is further configured to send a fourth SQL statement to the database management device, wherein the fourth SQL statement comprises a fourth field, and the fourth field indicates clearing data; and
the database management device is further configured to clear, based on the fourth field, expired transaction data or invalid transaction data, and a plurality of pieces of attribute information of cleared transaction data.

8. A blockchain-based data processing method, wherein the method is applied to a blockchain management device in a data processing system, the data processing system further comprises a block producer and a database management device, and the method comprises:
receiving one or more blocks sent by the block producer, wherein each block carries a plurality of pieces of transaction data;
sending a plurality of first structured query language SQL statements to the database management device, wherein each first SQL statement comprises one piece of first transaction data in the transaction data carried in the one or more blocks, and a block number and a transaction number of the piece of first transaction data, the block number indicates a block identifier of a block to which the piece of first transaction data belongs, the transaction number indicates an index of the piece of first transaction data in the plurality of pieces of transaction data of the block to which the piece of first transaction data belongs, the first SQL statement further comprises a first field, and the first field indicates storing the piece of first transaction data; and
receiving a message, indicating that the first transaction data is stored, that is returned by the data management device, and verifying the first transaction data based on the block number and the transaction number of the first transaction data.

9. The method according to claim 8, wherein the method further comprises:
synchronously sending the plurality of first structured query language SQL statements to the database management device and verifying second transaction data, wherein the second transaction data is stored in the database system before the first transaction data.

10. The method according to claim 8 or 9, wherein the sending a plurality of first structured query language SQL statements to the database management device comprises:
sending the plurality of first structured query language SQL statements to the database management device in parallel.

11. The method according to claim 9 or 10, wherein the verifying the first transaction data or verifying second transaction data comprises:
sending a second SQL statement to the database management device, wherein the second SQL statement comprises a second field, and a block number and a transaction number of transaction data that needs to be verified, the second field indicates the database management device to return validity information related to the transaction data that needs to be verified, and the transaction data that needs to be verified is the first transaction data or the second transaction data;
receiving the validity information returned by the database management device; and
verifying, based on the validity information, the transaction data that needs to be verified.

12. The method according to any one of claims 8 to 11, wherein the method further comprises:
send a third SQL statement to the database management device, wherein the third SQL statement comprises a third field, and a block number and a transaction number of transaction data that fails to be verified, and the third field indicates modifying validity information.

13. The method according to claim 12, wherein the method further comprises:
re-verifying transaction data that is verified after the transaction data that fails to be verified.

14. The method according to any one of claims 8 to 13, wherein the method further comprises:
sending a fourth SQL statement to the database management device, wherein the fourth SQL statement comprises a fourth field, and the fourth field indicates clearing data.

15. A blockchain-based data processing method, wherein the method is applied to a database management device in a data processing system, the data processing system further comprises a blockchain management device, and the method comprises:
receiving a plurality of first structured query language SQL statements from the blockchain management device, wherein each first SQL statement comprises one piece of first transaction data in transaction data carried in one or more blocks, and a block number and a transaction number of the piece of first transaction data, the block number indicates a block identifier of a block to which the piece of first transaction data belongs, the transaction number indicates an index of the piece of first transaction data in a plurality of pieces of transaction data of the block to which the piece of first transaction data belongs, the first SQL statement further comprises a first field, and the first field indicates storing the piece of first transaction data;
storing the piece of first transaction data based on the first field, and storing a plurality of pieces of attribute information of the piece of first transaction data, wherein the plurality of pieces of attribute information comprise the block number and the transaction number of the piece of first transaction data, and validity information of the piece of first transaction data; and
returning, to the blockchain management device, a message indicating that the first transaction data is stored.

16. The method according to claim 15, wherein the method further comprises:
receiving a second SQL statement from the blockchain management device, wherein the second SQL statement comprises a second field, and a block number and a transaction number of transaction data that needs to be verified, and the second field indicates the database management device to return validity information related to the transaction data that needs to be verified; and
returning, to the blockchain management device, the validity information based on the second field, and the block number and the transaction number of the transaction data that needs to be verified.

17. The method according to claim 15 or 16, wherein the method further comprises:
receiving a third SQL statement from the blockchain management device, wherein the third SQL statement comprises a third field, and a block number and a transaction number of transaction data that fails to be verified, and the third field indicates modifying validity information; and
modifying, based on the third field, and the block number and the transaction number of the transaction data that fails to be verified, the validity information of the transaction data that fails to be verified to be invalid.

18. The method according to any one of claims 15 to 17, wherein the method further comprises:
receiving a fourth SQL statement from the blockchain management device, wherein the fourth SQL statement comprises a fourth field, and the fourth field indicates clearing data; and
clearing, based on the fourth field, expired transaction data or invalid transaction data, and a plurality of pieces of attribute information of cleared transaction data.

19. A blockchain management device, wherein the blockchain management device is applied to a data processing system, the data processing system further comprises a block producer and a database management device, and the blockchain management device comprises:
a receiving unit, configured to receive one or more blocks sent by the block producer, wherein each block carries a plurality of pieces of transaction data;
a sending unit, configured to send a plurality of first structured query language SQL statements to the database management device, wherein each first SQL statement comprises one piece of first transaction data in the transaction data carried in the one or more blocks, and a block number and a transaction number of the piece of first transaction data, the block number indicates a block identifier of a block to which the piece of first transaction data belongs, the transaction number indicates an index of the piece of first transaction data in the plurality of pieces of transaction data of the block to which the piece of first transaction data belongs, the first SQL statement further comprises a first field, and the first field indicates storing the piece of first transaction data, wherein
the receiving unit is further configured to receive, from the blockchain management device, a message indicating that the first transaction data is stored; and
a processing unit, configured to verify the first transaction data based on the block number and the transaction number of the first transaction data.

20. A database management device, wherein the database management device is applied to a data processing system, the data processing system further comprises a blockchain management device, and the database management device comprises:
a receiving unit, configured to receive a plurality of first structured query language SQL statements from the blockchain management device, wherein each first SQL statement comprises one piece of first transaction data in transaction data carried in one or more blocks, and a block number and a transaction number of the piece of first transaction data, the block number indicates a block identifier of a block to which the piece of first transaction data belongs, the transaction number indicates an index of the piece of first transaction data in a plurality of pieces of transaction data of the block to which the piece of first transaction data belongs, the first SQL statement further comprises a first field, and the first field indicates storing the piece of first transaction data;
a processing unit, configured to store the piece of first transaction data based on the first field, and store a plurality of pieces of attribute information of the piece of first transaction data, wherein the plurality of pieces of attribute information comprise the block number and the transaction number of the piece of first transaction data, and validity information of the piece of first transaction data; and
a sending unit, configured to return, to the blockchain management device, a message indicating that the first transaction data is stored.

21. A blockchain management device, wherein the blockchain management device comprises a processor and a computer-readable storage medium storing a computer program; and
the processor is coupled to the computer-readable storage medium, and when the computer program is executed by the processor, the method according to any one of claims 8 to 14 is implemented.

22. A database management device, wherein the data processing apparatus comprises a processor and a computer-readable storage medium storing a computer program; and
the processor is coupled to the computer-readable storage medium, and when the computer program is executed by the processor, the method according to any one of claims 15 to 18 is implemented.

23. A computer-readable storage medium, storing a computer program, wherein when the computer program is executed by a processor, the method according to any one of claims 8 to 14 is implemented.

24. A computer-readable storage medium, storing a computer program, wherein when the computer program is executed by a processor, the method according to any one of claims 15 to 18 is implemented.

25. A chip system, comprising a processor, wherein the processor is invoked to perform the method according to any one of claims 8 to 14.

26. A chip system, comprising a processor, wherein the processor is invoked to perform the method according to any one of claims 15 to 18.

27. A computer program product, comprising a computer program, wherein when the computer program is executed by one or more processors, the method according to any one of claims 8 to 14 is implemented.

28. A computer program product, comprising a computer program, wherein when the computer program is executed by one or more processors, the method according to any one of claims 15 to 18 is implemented.
